(19) Europäisches Patentamt
European Patent Office
Office européen des brevets

(11) **EP 3 922 110 B1**

(12) **EUROPEAN PATENT SPECIFICATION**

(45) Date of publication and mention
of the grant of the patent:
**25.10.2023 Bulletin 2023/43**

(21) Application number: **20752037.0**

(22) Date of filing: **04.02.2020**

(51) International Patent Classification (IPC):
*A23L 33/16* (2016.01)     *A23L 33/175* (2016.01)
*A61K 33/00* (2006.01)

(52) Cooperative Patent Classification (CPC):
**A23L 33/105; A23L 33/16; A23L 33/175**

(86) International application number:
**PCT/RU2020/000057**

(87) International publication number:
**WO 2020/162795 (13.08.2020 Gazette 2020/33)**

(54) **DIETARY SUPPLEMENT**

NAHRUNGSERGÄNZUNG

ADDITIF BIOLOGIQUEMENT ACTIF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.02.2019 RU 2019103626**

(43) Date of publication of application:
**15.12.2021 Bulletin 2021/50**

(73) Proprietor: **Sokolov, Yuri Vladimirovich
Moscow, 105062 (RU)**

(72) Inventor: **Sokolov, Yuri Vladimirovich
Moscow, 105062 (RU)**

(74) Representative: **Sisto, Giustino
Via Luigi Guerico, 26
84134 Salerno (IT)**

(56) References cited:
WO-A1-2008/140233     EA-B1- 013 213
EA-B1- 013 213          KR-A- 20090 098 732
RU-C1- 2 246 958        US-A- 5 840 881
US-A1- 2006 093 685     US-A1- 2010 247 428

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to the food industry and, in particular, to biologically active dietary supplements (BADS) based on rare-earth metals that help maintaining good health. By this invention, a dietary supplement with cardioprotective and anti-cancer protective effects may be produced.

Humans and animals are exposed to various factors affecting their vital processes, including ultra-microelement metabolism, in a variety of ways. Now there is an increasing focus on how diseases of various etiologies are interrelated with chemical content in a human body, in particular, in the blood [Patent RU2567336, 10.11.2015, Method for Diagnosing Diseases Using Tracer Elements].

Microelement deficiency in a body triggers diseases. Despite extensive studies into rare-earth elements' pharmacological and biological properties, many aspects of their effects on biological entities are not entirely understood yet. Rare-earth elements are essential for normal body functioning and may influence various biological processes. As good complexing agents, they may be bound by many organic ligands (such as hydrocarbons, amino acids, oxy-acids, nucleotides, phosphatides, vitamins). [Iskanderov, M.I., Biologicheskiye svoistva preparatov na osnove redkozemel'nykh elementov (Biological Properties of Rare-Earth Element Based Drugs) // Veterinariya I kormleniye. - Issue 3/2016.]

One paper [Anuchin, A.M., Yuvs, G.G., REDKOZEMEL'NYE ELEMENTY V ZHIVYKH SISTEMAKH (RARE-EARTH ELEMENTS IN LIVING SYSTEMS) // VOPROSY BIOLOGICHESKOY, MEDITSINSKOY I FARMATSEVTICHESKOY KHIMII, Issue 9, 2014 p.39-46] addresses the effect from rare-earth elements (REE) on humans and other mammals and describes their health effects depending on the route of entry. REE effects on the key organ systems are discussed. Special attention has been given to the toxicity of high REE concentrations in living cells and their effects on cell process regulation, as well as to the beneficial effects produced by low-dose REE compounds.

The closest prior art is the Healthy Body Pak biologically active dietary supplement [http://healthway.ru/shop/healthy-body-start-pak-комплексное-оздоровление/], published 19.12.2016, including various minerals: calcium, magnesium, phosphorus, potassium, sodium, chloride, sulphur, cobalt, copper, aluminium, arsenic, barium, beryllium, boron, bromine, carbon, iodine, iron, manganese, selenium, zinc, cerium, cesium, chromium, dysprosium, erbium, europium, gadolinium, gallium, germanium, gold, hafnium, holmium, hydrogen, lanthanum, lithium, lutetium, molybdenum, neodymium, nickel, niobium, nitrogen, oxygen, praseodymium, rhenium, rubidium, samarium, scandium, silicon dioxide, silver, strontium, tantalum, ytterbium, thulium, tin, titanium, vanadium, ytterbium, yttrium, zirconium.

One technical issue associated with the prior art is low assimilability of rare-earth elements in pure form.

Furthermore, a paper [Soderzhaniye bioelementov i redkozemel'nykh elementov v biosubstratakh bol'nykh sirigomieliyey (Biological Element and Rare-Earth Element Content in Bio-Substrates of Patients with Myelosyringosis), a thesis work Number 03.00.04 assigned by the State Commission for Academic Degrees and Titles (SCADT); by Ekaterina Vladimirovna Pervushina, Candidate of Medical Science, Year: 2008; the thesis defended in: Ufa; SCADT Discipline Code: 03.00.04; Discipline: Biochemistry; Page count: 165; Tutors: Felix Khusainovich Kamilov, Doctor of Medicine (Dr. habil.), Professor, Ninel Andreevna Borisova, Doctor of Medicine (Dr. habil.), Professor; http://www.dissercat.com/content/soderzhanie-bioelementov-i-redkozemelnykh-elementov-v-biosubstratakh-bolnykh-siringomieliei#ixzz5e0TUTtGp] provides evidence of that a human body contains rare-earth elements, such as scandium, yttrium, lanthanum, cerium, praseodymium, neodymium, samarium, europium, gadolinium, terbium, dysprosium, holmium, erbium, thulium, ytterbium, lutetium. Differences in contents of the same in bio-substrates of apparently healthy persons and of patients with myelosyringosis are indicative of rare-earth elements' contribution to metabolic processes and allow suggesting that they play a pathogenic role in the development of neurodegenerative diseases.

It is believed that the rare-earth elements' pathogenic role is due to their presence in a body in a pure form and to their radioactive properties.

EA013213 B1, US 2006/093685 A1, KR 2009 0098732 A, US 2010/247428 A1 and WO 2008/140233 A1 disclose oral compositions containing rare earth elements as active ingredients.

It is, therefore, an object of the present invention to address the above issues associated with the prior art.

The technical result of the present invention is improving assimilability of rare-earth metals and producing a dietary supplement with cardioprotective and anti-cancer protective effects.

Said technical result is accomplished by providing a biologically active dietary supplement, comprising rare-earth metals: europium, terbium, lutetium, erbium, thulium, characterized in that it further comprises amino acetic acid (glycine) and succinic acid, wherein the metals: europium, terbium, lutetium, erbium are present in the dietary supplement in the chloride form, while thulium is present in the nitrate form, and a composition is selected with the following ratio (wt%):

| | |
|---|---|
| europium chloride (EuCl3) | 11 - 25 |
| terbium chloride (TbCl3) | 11 - 25 |

(continued)

| | |
|---|---|
| lutetium chloride (LuCl3) | 11 - 25 |
| erbium chloride (ErCl3) | 11 - 25 |
| thulium nitrate (TmNO3) | 11 - 25 |
| succinic acid | 11 - 13.6 |
| amino acetic acid (glycine) the balance | |

Detailed Description

In trials, the inventor has found by tests that assimilability of rare-earth metals may be improved and a dietary supplement with cardioprotective and anti-cancer protective effects may be produced by using rare-earth metals: europium, terbium, lutetium, erbium in the chloride form and thulium, if used, in the nitrate form.

By using rare-earth element chlorides and thulium nitrate, non-radioactive rare-earth elements may be used.

The inventor has not found any beneficial effect from the use of any other rare-earth elements.

Succinic acid is an antioxidant and an immunomodulator. By using it as part of the compound, metabolic, antihypoxic and antioxidant actions are produced. The metabolic action consists in that a ready substance is delivered into cells, which enters the Krebs cycle in which ATF is produced. With this effect, cells in all organs may receive more energy for their needs and, therefore, may work more efficiently and better.

The succinic acid's antihypoxic action consists in that it improves tissue respiration, i.e. oxygen transfer from the blood into cells and oxygen utilization. The succinic acid's antioxidant action consists in that it neutralizes free radicals damaging cell structures and causing them to die. Furthermore, due to its antioxidant effect, succinic acid inhibits malignant tumor growth. Succinic acid and succinic acid based compounds (succinates) have adaptogenic properties, i.e. they improve the general body resistance to negative external impacts, such as stresses, viruses, bacteria, heavy psycho-emotional and physical stresses, etc. Succinic acid acts as described above on the cells of any and all organs and tissues, thus improving the general body condition and functioning. However, the most pronounced improvement associated with the use of succinic acid is observed in brain and cardiac functions, as these organs are those that use the largest amounts of oxygen and energy.

As such, succinic acid products are successfully used to prevent senile changes in the central nervous system and as part of combined cardiovascular therapies.

Succinic acid is generally known to provide the following effects to various organs and systems' functions: improves energy supply to the brain and heart, thus providing optimal conditions for their functions; accelerates liver detoxification, such that, with the use of succinic acid, any intoxication period is much shorter than without it; reduces malignant tumor growth risks; reduces tumor growth rates; improves body resistance to infections, stresses and other negative external impacts; stimulates insulin release; improves the nervous system function efficiency and enhances oxygen delivery to the nervous system cells; potentiates therapeutic effects from other drugs so that treatment dosages and durations for various diseases may be reduced; reverses development and persistence of inflammatory processes, including allergic response, thus accelerating recovery from chronic illnesses; improves blood microcirculation in peripheral tissues (hands, feet, etc.); has excellent antidepressant properties, thus helping to relieve annoyance, anxiety, fears and negative emotions; reverses chronic inflammation in the urogenital tract.

As such, by using succinic acid as part of the BADS compound, rare-earth metals may be optimally assimilated in all organs and tissues.

The reasons for using glycine in the BADS compound of the present invention are the properties of this metabolic product which is a metabolic regulator with GABA-ergic, alpha1-adrenoblocking, antioxidant and antitoxic activities; it regulates glutamate (NMDA) receptor function; however, in terms of intervention, it is more effective for the central nervous system and brain.

Furthermore, succinic acid and glycine have been selected as supplements in the BADS compound due to their being an optimum binder for europium chloride (EuCl3), terbium chloride (TbCl3), lutetium chloride (LuCl3), erbium chloride (ErCl3), and thulium nitrate (TmNO3), wherein the latter neither dissolve in the above acids, nor contribute to degradation of beneficial properties of the acids.

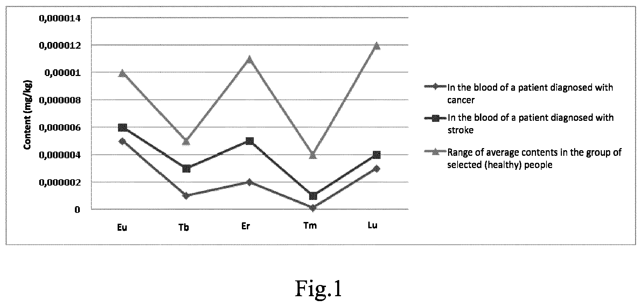

The ultra-microelements used in the invention are present in any living cell; however, as a disease develops, the content of these elements goes down (ref. to the plot of Fig.1, showing a comparison between rare-earth element contents in the blood of healthy persons and those with diseases.

In view of the above, to treat or prevent diseases, external rare-earth elements are to be delivered, such as via biologically active supplements, to compensate for their losses in the body.

Through experiments, the following BADS compound formulation (wt%) has been established:

europium chloride (EuCl3)  11 - 25
terbium chloride (TbCl3)  11 - 25
lutetium chloride (LuCl3)  11 - 25
erbium chloride (ErCl3)  11 - 25
thulium nitrate (TmNO3)  11 - 25
succinic acid  11 - 13.6
amino acetic acid (glycine) the balance.

Ranges from which the inventor selected the values in wt% for:

europium chloride (EuCl3)  11 - 25
terbium chloride (TbCl3)  11 - 25
lutetium chloride (LuCl3)  11 - 25
erbium chloride (ErCl3)  11 - 25
thulium nitrate (TmNO3)  11 - 25

are based on the effects from each component as determined through the experiments.

The minimum value of 11% in the range is the value at which the BADS of the present invention becomes effective and gains its beneficial properties.

The maximum value of 25% is a value also determined through the experiments, which is the ceiling value at which the product is effective. Above this value, there was a dramatic decrease in the BADS beneficial effects.

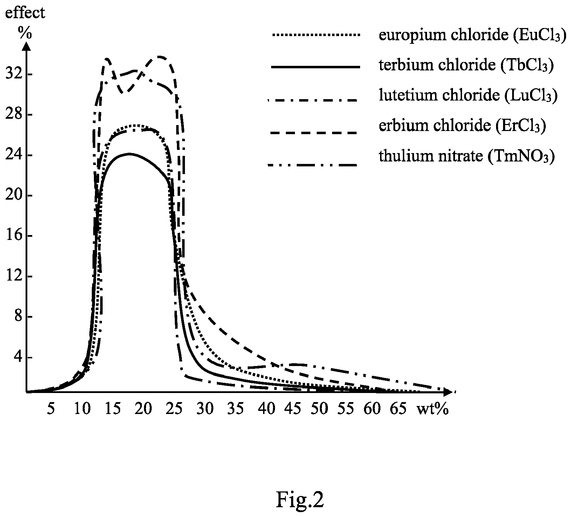

A comparative analysis of changes in the contents of the BADS ingredients versus the product efficiency is given in Fig.2.

Example 1

The biologically active dietary supplement (BADS) of the present invention, when administered orally in C57BL/6 strain mice with inoculated Lewis lung carcinoma, has been found to have anti-cancer protective properties.

Assessment of the tumor diameter over time (Tables 1, 2, 3) has shown that, by administering the BADS compound orally at the doses of 25 mcg/kg and 125 mcg/kg at various stages, the tumor growth was inhibited. Perhaps, if a smaller number of this aggressive tumor variety cells had been inoculated, the differences could have been expected to remain until the end of the experiment.

Table 1. Tumor Diameter (First Measurement).

| Groups | Control | BADS 25 mcg/kg | BADS 125 mcg/kg |
|---|---|---|---|
| Average | 1.50 | 1.07 | 1.18 |
| Standard error | 0.02 | 0.06 | 0.02 |
| Significant difference against Control | | $P<0.001$ | $P<0.001$ |

Table 2. Tumor Diameter (Second Measurement).

| Groups | Control | BADS 25 mcg/kg | BADS 125 mcg/kg |
|---|---|---|---|
| Average | 1.80 | 1.23 | 1.43 |
| Standard error | 0.03 | 0.01 | 0.02 |
| Significant difference against Control | | $P<0.001$ | $P<0.001$ |

Table 3. Tumor Diameter (Third Measurement).

| Groups | Contr ol | BADS 25 mcg/kg | BADS 125 mcg/kg |
|---|---|---|---|
| Average | 2.09 | 1.87 | 1.87 |
| Standard error | 0.05 | 0.03 | 0.05 |
| Significant difference against Control | | P<0.001 | P<0.01 |

Assessment of Antitumor and Anti-Metastatic Effects Tumor diameter changes over time were assessed intra vitam 1 time a week. Tumor growth inhibition percentage (based on the tumor node weight) was calculated by the formula:

$$\frac{\text{Average Tumor Weight in Control Group} - \text{Average Tumor Weight in Experimental Group}}{\text{Average Tumor Weight in Control Group}} \times 100\%$$

Metastatic spread rate was assessed against various criteria:

1. An average number of metastases in one animal per group was determined. An average area of metastatic lesion was calculated, while determining the metastasis diameter. It was taken into account that, with Lewis lung carcinoma, metastases are primarily located subpleurally;
2. The amount of tumor dissemination difference between the control and the experimental groups was assessed based on the Metastasis Inhibition Index (MII):

$$MII = \frac{(A_1 \times B_1) - (A_2 \times B_2)}{(A_1 \times B_1)} \times 100\%$$

where A1 is the metastasis frequency in the control group; A2 is the metastasis frequency in the experimental group; B1 is the average number of metastases in the control animals; B2 is the average number of metastases in the experimental animals.

When removing the experimental animal groups, on the 24th day it was found that the animals treated with the BADS compound of the present invention were different from the control animals (the Control Group) both in the animal average weight (Table 4), and the tumor weight (Table 5). The tumor growth inhibition percentage in the group treated with the BADS of the present invention (based on the tumor node weight) was 26.72%.

Table 4. Animal Weights

| Groups | Control | BADS of the present invention |
|---|---|---|
| Average | 29.21 | 25.35 |
| Standard error | 0.85 | 0.61 |
| Significant difference against Control | | P=0.0018 |

Table 5. Tumor Weights

| Groups | Control | BADS of the present invention |
|---|---|---|
| Average | 7.26 | 5.32 |
| Standard error | 0.65 | 0.29 |
| Significant difference against Control | | P=0.02 |

The metastatic spread rate assessment demonstrated that, against the Control Group, a smaller number of metastases were observed in the group treated with the BADS of the present invention (Table 6). However, from the metastatic lesion area assessment, it was noted that this indicator was significantly lower in the animal group treated with the BADS of the present invention as against the Control Group (Table 7).

Table 6. Average Number of Lung Metastases

| Groups | Control | BADS 25 mcg/kg | BADS 125 mcg/kg |
|---|---|---|---|
| Average | 23.25 | 19.00 | 22.35 |
| Standard error | 3.40 | 2.34 | 2.67 |
| MII (%) | | 18.28 | 3.87 |

Table 7. Metastatic Lesion Area per Mouse (mm2).

| Groups | Control | BADS 25 mcg/kg | BADS 125 mcg/kg |
|---|---|---|---|
| Average | 19.50 | 13.38 | 18.69 |
| Standard error | 2.88 | 1.37 | 3.12 |
| Significant difference against Control | | P<0.001 | P<0.001 |

The experimental study of anti-cancer properties of the BADS compound of the present invention has shown that, if developed, it has good prospects for success. Thus, when administered orally in C57BL/6 strain mice with inoculated Lewis lung carcinoma, the BADS compound of the present invention was capable of inhibiting leg tumor growth and of reducing the metastatic spread rate in lungs.
The present invention may be used by persons with pathological conditions.

Example 2

Animal studies provide the fullest data on the potency of a substance proposed for human use.
SHR rats are a standard subject in arterial hypertension studies. The present study is necessary to investigate the effect from exogenous administration of the above compounds to the physiological status of animal models with arterial hypertension.
Cardioprotective properties of the BADS of the present invention have been studied by experiments on sexually mature SHR strain rats. The substance was administered in a single oral dose via a gastric tube to determine the dose that significantly reduces arterial blood pressure (ABP). The dose and intervals between administrations were to be determined in the course of the study.
The study was aimed at investigating cardioprotective properties of the BADS of the present invention, when administered in a single dose via a gastric tube to SHR strain rats with high arterial blood pressure (ABP) .

Table 8. Changes in arterial blood pressure values in experimental animals during the study of the BADS of the present invention at the doses of 5, 10 and 50 mg/kg.

| Dose (mg/kg) | Values prior to administration | | | | Values 3 hours after administration | | | | Percent changes in values | | | |
|---|---|---|---|---|---|---|---|---|---|---|---|---|
| | SBP mm Hg | DBP mm Hg | MAP mm Hg | HR beat/ minute | SBP mm Hg | DBP mm Hg | MAP mm Hg | HR beat/ minute | SBP % | DBP % | MAP % | HR % |
| 5 | 171 | 138 | 149 | 395 | 165 | 132 | 143 | 376 | -3.7 | -4.0 | -4.0 | -4.7 |
| 5 | 180 | 142 | 155 | 365 | 163 | 131 | 141 | 377 | -9.4 | -8.0 | -9.0 | 3.2 |
| 3 | 202 | 159 | 173 | 367 | 171 | 144 | 153 | 380 | -15.3 | -9.6 | -11.6 | 3.7 |
| 10 | 162 | 135 | 144 | 350 | 176 | 142 | 154 | 369 | 9.0 | 5.8 | 6,9 | 5.5 |
| 10 | 162 | 133 | 143 | 339 | 196 | 145 | 162 | 369 | 20.5 | 8.8 | 13.3 | 8.8 |

(continued)

| Dose (mg/kg) | Values prior to administration | | | | Values 3 hours after administration | | | | Percent changes in values | | | |
|---|---|---|---|---|---|---|---|---|---|---|---|---|
| | SBP mm Hg | DBP mm Hg | MAP mm Hg | HR beat/ minute | SBP mm Hg | DBP mm Hg | MAP mm Hg | HR beat/ minute | SBP % | DBP % | MAP % | HR % |
| 10 | 147 | 95 | 112 | 342 | 170 | 134 | 146 | 383 | 16.0 | 41.1 | 30.4 | 12.2 |
| 50 | 147 | 92 | 110 | 422 | 151 | 107 | 121 | 414 | 2.7 | 16.6 | 10.0 | -2.0 |
| 50 | 165 | 134 | 145 | 404 | 161 | 129 | 140 | 401 | -2.6 | -3.7 | -3.4 | -0.8 |
| 50 | 136 | 89 | 105 | 408 | 169 | 143 | 152 | 364 | 24.2 | 59.7 | 44.8 | -10.7 |

Obtained data shows a decrease in hemodynamic values in the 5 mg/kg and 50 mg/kg dose groups.

The data demonstrates that the BADS of the present invention exhibited its hypotensive properties with a significant decrease against the initial values. Decreases in DBP, MAP and HR were also observed.

## Claims

1. A biologically active dietary supplement, comprising rare-earth metals: europium, terbium, lutetium, erbium, thulium, **characterized in that** it further comprises amino acetic acid (glycine) and succinic acid, wherein the metals: europium, terbium, lutetium, erbium are present in the dietary supplement in the chloride form, while thulium is present in the nitrate form, and a composition is selected with the following ratio (wt%):

| | |
|---|---|
| europium chloride (EuCl3) | 11 - 25 |
| terbium chloride (TbCl3) | 11 - 25 |
| lutetium chloride (LuCl3) | 11 - 25 |
| erbium chloride (ErCl3) | 11 - 25 |
| thulium nitrate (TmNO3) | 11 - 25 |
| succinic acid | 11 - 13.6 |
| amino acetic acid (glycine) the balance | |

## Patentansprüche

1. Biologisch aktives Nahrungsergänzungsmittel, umfassend Seltenerdmetalle: Europium, Terbium, Lutetium, Erbium, Thulium, **dadurch gekennzeichnet, dass** es ferner Aminoessigsäure (Glycin) und Bernsteinsäure umfasst, wobei die Metalle: Europium, Terbium, Lutetium, Erbium in dem Nahrungsergänzungsmittel in der Chloridform vorliegen, während Thulium in der Nitratform vorliegt, und eine Zusammensetzung mit dem folgenden Verhältnis (Gew.-%) gewählt wird:

| | |
|---|---|
| Europiumchlorid (EuCl3) | 11 - 25 |
| Terbiumchlorid (TbCl3) | 11 - 25 |
| Lutetiumchlorid (LuCl3) | 11 - 25 |
| Erbiumchlorid (ErCl3) | 11 - 25 |
| Thuliumnitrat (TmNO3) | 11 - 25 |
| Bernsteinsäure | 11 - 13,6 |
| Aminoessigsäure (Glycin) der Rest | |

**Revendications**

1. Un complément alimentaire biologiquement actif, contenant des métaux de terres rares : europium, terbium, lutécium, erbium, thulium, **caractérisé par le fait qu'**il contient notamment de l'acide aminoacétique (glycine) et de l'acide succinique, dans lesquels les métaux : europium, terbium, lutécium, erbium sont présents dans le complément alimentaire sous forme de chlorure, tandis que le thulium est présent sous forme de nitrate, et une composition est sélectionnée avec le ratio suivant (% en poids) :

| | |
|---|---|
| chlorure d'europium (EuCl3) | 11 - 25 |
| chlorure de terbium (TbCl3) | 11 - 25 |
| chlorure de lutécium (LuCl3) | 11 - 25 |
| chlorure d'erbium (ErCl3) | 11 - 25 |
| nitrate de thulium (TmNO3) | 11 - 25 |
| acide succinique | 11 - 13.6 |
| acide amino-acétique (glycine) | équilibre |

Fig.1

Fig.2

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- RU 2567336
- EA 013213 B1
- US 2006093685 A1
- KR 20090098732 A
- US 2010247428 A1
- WO 2008140233 A1

**Non-patent literature cited in the description**

- **ISKANDEROV, M.I.** Biologicheskiye svoistva preparatov na osnove redkozemel'nykh elementov (Biological Properties of Rare-Earth Element Based Drugs). *Veterinariya I kormleniye,* 2016, (3
- **ANUCHIN, A.M. ; YUVS, G.G.** REDKOZEMEL'NYE ELEMENTY V ZHIVYKH SISTEMAKH (RARE-EARTH ELEMENTS IN LIVING SYSTEMS). *VOPROSY BIOLOGICHESKOY, MEDITSINSKOY I FARMATSEVTICHESKOY KHIMII,* 2014, (9), 39-46
- Soderzhaniye bioelementov i redkozemel'nykh elementov v biosubstratakh bol'nykh sirigomieliyey (Biological Element and Rare-Earth Element Content in Bio-Substrates of Patients with Myelosyringosis). **EKATERINA VLADIMIROVNA PERVUSHINA.** thesis. State Commission for Academic Degrees and Titles (SCADT), 2008, 165